# EUROPÄISCHE PATENTSCHRIFT

(11) **EP 1 403 475 B1**
(45) Veröffentlichungstag und Bekanntmachung des Hinweises auf die Patenterteilung: **12.12.2007**
(21) Anmeldenummer: 03018810.6
(22) Anmeldetag: 19.08.2003
(51) Int. Cl.: F01M 11/02, B01D 35/00

(54) **Flüssigkeitsfilter-Wärmetauscher-Einheit**
Combined fluid filter and heat exchanger device
Unité d' un filtre à liquide et d'un échangeur de chaleur

(30) Priorität: 26.09.2002 DE 10245005
(43) Veröffentlichungstag der Anmeldung: 31.03.2004
(73) Patentinhaber: MANN+HUMMEL GmbH, 71638 Ludwigsburg (DE)
(72) Erfinder: Jainek, Herbert, 74074 Heilbronn (DE)
(74) Vertreter: Voth, Gerhard

(56) Entgegenhaltungen:
- DE-A- 10 205 518
- DE-A- 19 635 777
- GB-A- 582 260
- GB-A- 881 764
- US-A- 2 729 339
- US-A- 4 388 196

## Beschreibung

Die Erfindung bezieht sich auf eine Flüssigkeitsfilter-Wärmetauscher-Einheit nach dem Oberbegriff des Anspruches 1.

In Brennkraftmaschinen wird zur Ölkühlung eine derartige Flüssigkeitsfilter-Wärmetauscher-Einheit an den Motorblock angeflanscht, um das zur Motorkühlung benötigte Öl reinigen und kühlen zu können. Die Flüssigkeitsfilter-Wärmetauscher-Einheit umfasst einen Flüssigkeitsfilter mit einem in einem Filtergehäuse angeordneten Filterelement sowie einen mit dem Filtergehäuse verbundenen Wärmetauscher. Die gesamte Einheit wird an den Motorblock angeflanscht, wobei das ungereinigte, erhitzte Rohöl vom Motorblock über einen Zulauf in der Flüssigkeitsfilter-Wärmetauscher-Einheit zunächst in den Wärmetauscher eingeleitet und dort gekühlt wird und anschließend auf die Rohölseite des Filterelementes geführt und im Filterelement gereinigt wird. Über die Reinseite des Filterelementes wird das gereinigte und gekühlte Öl wieder in den Ölkreislauf im Motorblock eingeleitet.

Um zu verhindern, dass insbesondere bei einem Kaltstart bei großen Kältegraden das in den Wärmetauscher einfließende Schmutzöl auf Grund seiner bei niedrigen Temperaturen erhöhten Viskosität verblockt und eine stationäre Durchströmung des Wärmetauschers behindert wird, zweigt von dem Zulauf zum Wärmetauscher ein Bypass direkt zur Rohseite des Filterelementes ab, in dem ein Umgehungsventil angeordnet ist, welches bei regulärer Betriebstemperatur in Schließposition steht und damit den Bypass versperrt und bei niedrigen Temperaturen geöffnet wird, so dass unter Umgehung des Wärmetauschers das Schmutzöl unmittelbar auf die Rohseite des Filterelementes geleitet wird. Die Schaltfunktion des Umgehungsventils wird in der Regel über den Druck im Zulauf gesteuert, der bei einem Blockieren des Öls im Wärmetauscher zunimmt. Überschreitet der Druck einen zulässigen Grenzwert, wird das Umgehungsventil geöffnet und das Schmutzöl kann unmittelbar zur Rohseite des Filterelementes strömen. Auf diese Weise wird ein Verstopfen des Wärmetauschers verhindert und außerdem eine schnellere Erwärmung des Öls erreicht.

Eine derartige Flüssigkeitsfilter-Wärmetauscher-Einheit ist z. B. der DE 196 35 777 zu entnehmen.

Von diesem Stand der Technik ausgehend liegt der Erfindung das Problem zugrunde, eine Flüssigkeitsfilter-Wärmetauscher-Einheit mit konstruktiv einfachen Maßnahmen und ohne steuernden Eingriff von außen in der Weise auszubilden, dass bei niedrigen Temperaturen der Wärmetauscher abgeschaltet und vom zu reinigenden Flüssigkeitsstrom umgangen wird. Zweckmäßig soll bei Wartung der Brennkraftmaschine die Flüssigkeit ohne äußeren Eingriff aus dem Wärmetauscher ablaufen.

Dieses Problem wird erfindungsgemäß mit den Merkmalen des Anspruches 1 gelöst. Die Unteransprüche geben zweckmäßige Weiterbildungen an.

Bei der erfindungsgemäßen Flüssigkeitsfilter-Wärmetauscher-Einheit befindet sich das Schaltglied im Zulauf zum Wärmetauscher und reguliert den Flüssigkeitsstrom in den Wärmetauscher hinein bzw. alternativ in den Bypass, welcher unter Umgehung des Wärmetauschers unmittelbar vom Zulauf zur Rohseite des Filterelementes des Flüssigkeitsfilters führt. Das Schaltglied umfasst erfindungsgemäß ein Bimetallelement, das bei Überschreiten bzw. Unterschreiten einer spezifischen Schalttemperatur sich selbsttätig zwischen zwei Schaltpositionen verstellt. In einer ersten Schaltposition, die das Bimetallelement unterhalb seiner Schalttemperatur einnimmt, wird der Flüssigkeitsstrom oder ein Teil des Flüssigkeitsstromes unter Umgehung des Wärmetauschers durch den Bypass auf die Rohseite des Filterelementes geleitet. In der zweiten Schaltposition, die das Bimetallelement oberhalb der Schalttemperatur einnimmt, wird dagegen zweckmäßig der gesamte Flüssigkeitsstrom in den Wärmetauscher geführt; diese Schaltposition entspricht dem Normalbetrieb der Brennkraftmaschine.

Mit der Ausführung als Bimetallelement wird ein selbsttätiges, temperaturabhängiges Schalten des Schaltgliedes erreicht. Äußere Eingriffe zur Durchführung des Schaltvorganges sind nicht erforderlich. Die Schalttemperatur kann durch eine entsprechende Auslegung des Bimetallelementes an den jeweiligen Einsatzzweck angepasst werden; sie liegt beispielsweise für eine Ölfilter-Wärmetauscher-Einheit zur Filterung und Kühlung von Motoröl in Brennkraftmaschinen oder Getriebeöl in einem Temperaturbereich von etwa 40° C bis 80° C. Unterhalb dieser Temperatur steht das Bimetallelement in einer den Bypass öffnenden Position, so dass das zuströmende Schmutzöl unter Umgehung des Wärmetauschers unmittelbar zum Filterelement geleitet wird. Da der Schaltvorgang im Bimetallelement unabhängig vom Betriebszustand der Brennkraftmaschine erfolgt, steht das Bimetallelement nicht nur nach einem Kaltstart bei niedrigen Außentemperaturen in einer den Wärmetauscher umgehenden Position, sondern auch nach dem Abstellen der Brennkraftmaschine und Abkühlen der zu reinigenden Flüssigkeit unter die Schalttemperatur, was den Vorteil hat, dass bei Motorstillstand nach dem Unterschreiten der Schalttemperatur das Bimetallelement automatisch in eine den Bypass öffnende Position verstellt wird und bei einer Wartung sämtliche Flüssigkeit aus dem Wärmetauscher über den Bypass abfließen kann. Im Falle eines Ölfilters und Öl-Wärmetauschers wird hierdurch ein Ölwechsel erheblich vereinfacht, da nahezu das gesamte Restöl dem System entnommen wird.

Gemäß einer ersten zweckmäßigen Weiterbildung ist das Bimetallelement unmittelbar am Bypass angeordnet, insbesondere im Bereich der Bypassöffnung am Zulauf zum Wärmetauscher. Unterhalb der Schalttemperatur steht das Bimetallelement in Öffnungsstellung, oberhalb der Schalttemperatur dagegen in Schließstellung, woraufhin der Flüssigkeitsstrom ausschließlich in den Wärmetauscher strömt.

Gemäß einer alternativen, vorteilhaften Ausführung kann es auch zweckmäßig sein, das Bimetallelement unmittelbar als Teil des Wärmetauschers anzuordnen, wobei der Bypass zweckmäßig ebenfalls Bestandteil des Wärmetauschers ist und insbesondere in eine Zwischenplatte integriert ist, die zwischen einer Grund- bzw. Befestigungsplatte des Wärmetauschers und dem Wärmetauschergehäuse angeordnet ist. Auch in diesem Fall ist das Bimetallelement unterhalb der Schalttemperatur geöffnet, so dass zumindest ein Teilstrom der Flüssigkeit unter Umgehung des Wärmetauschers unmittelbar zur Rohölseite des Filters gelangt. Oberhalb der Schalttemperatur ist das Bimetallelement geschlossen und der gesamte Flüssigkeitsstrom wird durch den Wärmetauscher geleitet.

Es kann gegebenenfalls aber auch zweckmäßig sein, sowohl an der Einlassöffnung zum Wärmetauscher als auch am Bypass jeweils ein Bimetallelement vorzusehen, die beide bei gleicher Schalttemperatur geschaltet werden, jedoch in entgegengesetzte Richtungen; in dieser Ausführung werden jegliche Fehlströme vermieden.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine Flüssigkeitsfilter-Wärmetauscher-Einheit, die zur Reinigung und Kühlung von Öl an einen Motorblock einer Brennkraftmaschine angeflanscht werden kann,
- Fig. 2: eine Detailansicht eines als Bimetallelement ausgeführten Schaltgliedes, über das der Flüssigkeitsstrom durch einen Bypass zum Wärmetauscher zu regulieren ist, dargestellt in Öffnungsstellung,
- Fig. 3: das Bimetallelement in Schließstellung,
- Fig. 4: ein weiteres im Bereich der Einlassöffnung des Bypass angeordnetes Bimetallelement, dem eine Prallplatte vorgeschaltet ist,
- Fig. 5: eine Detailansicht eines Wärmetauschers mit einer Grundplatte, einer Zwischenplatte mit Bypass und einem Wärmetauschergehäuse.

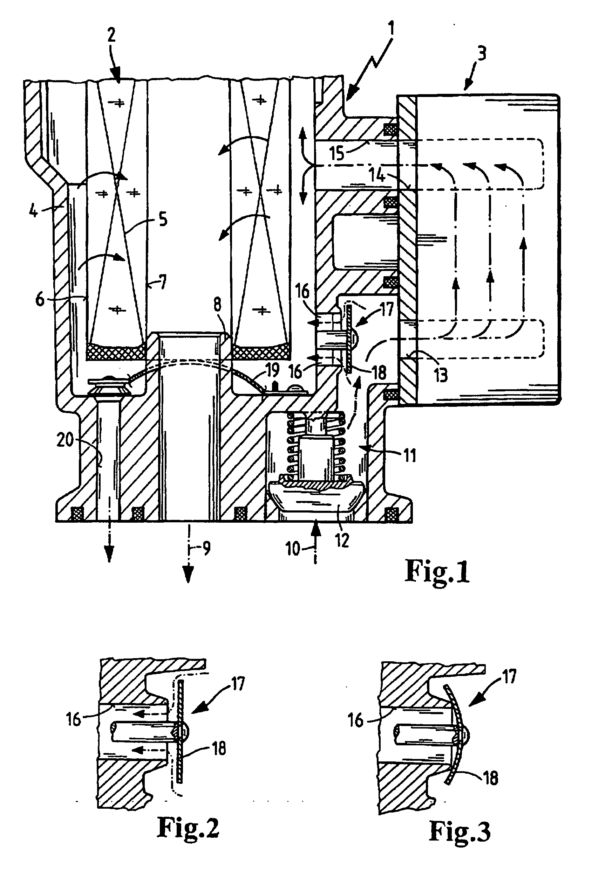

Die in Fig. 1 dargestellte Flüssigkeitsfilter-Wärmetauscher-Einheit 1 dient zum Kühlen und Reinigen von Motoröl oder Getriebeöl in einer Brennkraftmaschine und umfasst einen Flüssigkeitsfilter 2 und einen Wärmetauscher 3, wobei Flüssigkeitsfilter 2 und Wärmetauscher 3 zwar als eigenständige Bauteile ausgeführt sind, jedoch fest miteinander verbunden sind. Der Flüssigkeitsfilter 2 weist in einem Filtergehäuse 4 ein als Hohlzylinder ausgeführtes Filterelement 5 auf, dessen radiale Außenseite die von der zu reinigenden Rohflüssigkeit radial anzuströmende Rohseite 6 und dessen zylindrischer Innenraum die Reinseite 7 bildet, über die die gereinigte Flüssigkeit axial abgeführt wird. Das Filterelement 5 ist in einen Aufnahmeraum im Filtergehäuse 4 eingesetzt, wobei der zylindrische Innenraum des Filterelementes auf einen Gehäusestutzen 8 aufgesetzt ist, der Teil eines Ableitungsrohrs zur Ableitung der gereinigten Flüssigkeit in Pfeilrichtung 9 ist.

Die Zufuhr der zu reinigenden, verschmutzten Flüssigkeit erfolgt in Pfeilrichtung 10 in einen im Filtergehäuse 4 ausgebildeten Zulaufkanal 11, in welchem ein Rücklaufsperrventil 12 zur Vermeidung eines unerwünschten Rückfließens der zu reinigenden Flüssigkeit entgegen Pfeilrichtung 10 angeordnet ist. Der Zulaufkanal 11 kommuniziert mit einer Einlassöffnung 13 im seitlich am Filtergehäuse 4 angeordneten Wärmetauscher 3. Im regulären Betrieb - oberhalb einer Schalt- bzw. Grenztemperatur der Flüssigkeit - strömt die zu reinigende Flüssigkeit durch den Zulaufkanal 11 und über die Einlassöffnung 13 in den Wärmetauscher 3, wird in diesem gekühlt und fließt anschließend über eine Auslassöffnung 14 im Gehäuse des Wärmetauschers 3 und einen Verbindungskanal 15 im Filtergehäuse in den äußeren, das Filterelement 5 umgreifenden Ringraum und trifft radial auf die Rohseite 6 des Filterelementes. Nach dem radialen Durchströmen des Filterelementes wird über die Reinseite 7 und den Gehäusestutzen 8 die gereinigte und gekühlte Flüssigkeit in Pfeilrichtung 9 abgeleitet.

Der Zulaufkanal 11 ist über einen Bypass 16 in der Wandung des Filtergehäuses - welcher im Ausführungsbeispiel der Einlassöffnung 13 zum Wärmetauscher 3 gegenüberliegt - unmittelbar mit dem das Filterelement 5 umgreifenden Ringraum sowie der Rohseite 6 des Filterelementes verbunden. Die Bypassöffnung ist von einem im Bereich des Zulaufkanals 11 angeordneten Schaltglied 17 zu verschließen bzw. zu öffnen, wobei das Schaltglied 17 ein Bimetallelement 18 umfasst, welches bei Überschreiten und Unterschreiten einer spezifischen Schalttemperatur zwischen Schließposition und Öffnungsposition verstellt wird. In Fig. 1 ist das Schaltglied 17 in seiner Öffnungsposition dargestellt, in der der in den Zulaufkanal 11 einströmende Flüssigkeitsstrom (Teilstrom) unmittelbar über den Bypass 16 unter Umgehung des Wärmetauschers 3 zur Rohseite 6 des Filterelementes 5 geführt wird. Diese Position nimmt das Bimetallelement unterhalb seiner spezifischen Schalttemperatur ein, die im Falle einer Ölfilterung bzw. Ölkühlung beispielsweise bei 80° C liegt, um zu verhindern, dass die bei niedrigen Temperaturen erhöhte Viskosität der zu reinigenden Flüssigkeit zu einem erhöhten Anstieg des Druckes (Blockieren und Verstopfen) des Wärmetauschers 3 führt. Bei Überschreiten der Schalttemperatur wird das Bimetallelement 18 selbsttätig in seine zweite Schaltposition überführt, die der Schließposition entspricht und in der der Bypass 16 abgesperrt ist, so dass der gesamte Flüssigkeitsstrom über die Einlassöffnung 13 durch den Wärmetauscher 3 geführt wird.

Am Boden des das Filterelement 5 aufnehmenden Aufnahmeraumes im Filtergehäuse 4 zweigt ein Ablaufkanal 20 ab, welcher von einer Schließfeder 19 zu verschließen ist, die bei eingesetztem Filterelement 5 von dessen Stirnseite axial in ihre Schließstellung beaufschlagt ist, in der der Ablaufkanal 20 verschlossen ist. Wird das Filterelement 5 dagegen aus dem Aufnahmeraum im Filtergehäuse 4 herausgenommen, wird die Schließfeder 19 auf Grund ihrer Eigenspannung selbsttätig in Öffnungsstellung versetzt und der Ablaufkanal 20 geöffnet. Daraufhin kann die gesamte, sich noch im Aufnahmeraum des Filtergehäuses 4 befindliche Flüssigkeit über den Ablaufkanal 20 abströmen. Da das Filterelement nur bei abgestellter Brennkraftmaschine entfernt wird und im Außerbetriebszustand der Brennkraftmaschine das Bimetallelement 18 durch Abkühlen der Flüssigkeit unterhalb der Schalttemperatur in seine Öffnungsposition versetzt wird, wird nach dem Abstellen der Brennkraftmaschine automatisch auch der nahezu gesamte Flüssigkeitsinhalt des Wärmetauschers 3 über den Bypass 16 und den Ablaufkanal 20 aus der Flüssigkeitsfilter-Wärmetauscher-Einheit 1 abgeleitet.

Die Fig. 2 und 3 zeigen das Schaltglied 17 mit dem Bimetallelement 18 an der Öffnung des Bypass 16 in einer vergrößerten Darstellung. Gemäß Fig. 2 befindet sich das Bimetallelement 18 in seiner Öffnungsstellung, die Flüssigkeit kann in der dargestellten Pfeilrichtung durch den Bypass 16 strömen. Diese Position nimmt das Bimetallelement 18 unterhalb seiner Schalttemperatur ein.

In Fig. 3 ist das Schaltglied 17 geschlossen, das Bimetallelement 18 verschließt die Öffnung des Bypass 16, so dass jeder Durchfluss durch den Bypass 16 verhindert wird. Diese Position nimmt das Bimetallelement 18 oberhalb seiner Schalttemperatur ein.

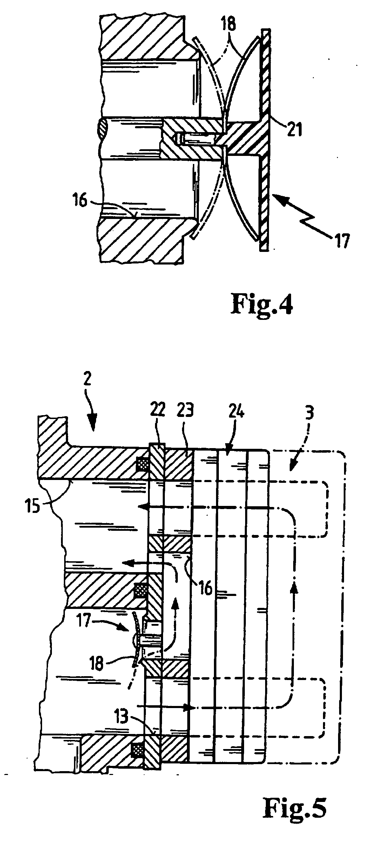

In Fig. 4 ist dem Bimetallelement 18 des Schaltglieds 17 eine Prallplatte 21 vorgeschaltet, die beispielsweise als Kunststoffscheibe ausgeführt ist und verhindern soll, dass das Bimetallelement 18 in geöffneter Stellung (mit durchgezogenem Strich dargestellt) von dem Flüssigkeitsstrom mitgerissen und versehentlich in die mit gestricheltem Strich dargestellte Schließposition überführt wird. Die Prallplatte 21 kann gegebenenfalls auch die Funktion eines Befestigungselementes für das Bimetallelement 18 übernehmen. Der Durchmesser der Prallplatte 21 ist vorteilhaft so bemessen, dass das Bimetallelement 18 in geöffneter Stellung vollständig von der Prallplatte abgeschirmt wird.

In der Ausführung gemäß Fig. 5 besteht der Wärmetauscher 3 aus einer Grund- bzw. Befestigungsplatte 22, auf die eine Zwischenplatte 23 aufgesetzt ist, die Träger des Wärmetauschergehäuses 24 ist. Der Bypass 16 ist in die Zwischenplatte 23 eingebracht, wobei das Bimetallelement 18 des Schaltglieds 17 im Bereich der Bypass-Einführöffnung angeordnet ist, die sich in der Grundplatte 22 befindet und mit dem Zulaufkanal für das Rohöl kommuniziert. Das Bimetallelement 18 ist an der Grundplatte 22 und somit auch am Wärmetauscher 3 gehalten.

Über die Abströmöffnung des Bypass, die ebenfalls in die Grundplatte 22 eingebracht ist, ist der Bypass mit dem Verbindungskanal 15 zur Rohseite des Filterelements im Flüssigkeitsfilter 2 verbunden. Unterhalb der Schalttemperatur ist das Bimetallelement 18 geöffnet und zumindest ein Teil des Flüssigkeitsstromes kann unter Umgehung der Wärmetauscherelemente des Wärmetauschers 3 unmittelbar über den Bypass 16 in den Verbindungskanal 15 strömen. Oberhalb der Schalttemperatur ist das Bimetallelement 18 geschlossen, so dass der gesamte Flüssigkeitsstrom zur Kühlung durch den Wärmetauscher 3 und anschließend ebenfalls über den Verbindungskanal 15 zur Rohseite des Filterelements geleitet wird.

## Patentansprüche

1. Flüssigkeitsfilter-Wärmetauscher-Einheit, insbesondere für Kraftfahrzeuge, wobei der Flüssigkeitsfilter (2) in einem Filtergehäuse (4) ein Filterelement (5) aufweist und die Rohseite (6) des Filterelements (5) mit dem Ablauf des Wärmetauschers (3) in Verbindung steht, mit einem Bypass (16), der unter Umgehung des Wärmetauschers (3) den Zulaufkanal (11) unmittelbar mit der Rohseite (6) des Filterelements (5) verbindet, wobei ein Schaltglied (17) zur Steuerung des Flüssigkeitsstromes in den Wärmetauscher (3) bzw. in den Bypass (16) vorgesehen ist,
**dadurch gekennzeichnet,**
**dass** das Schaltglied (17) ein Bimetallelement (18) umfasst, das unabhängig vom Betriebszustand einer Brennkraftmaschine unterhalb einer Schalttemperatur in einer den Flüssigkeitsstrom in den Bypass (16) leitenden Position steht, wobei bei einer Wartung sämtliche Flüssigkeit aus dem Wärmetauscher (3) über den Bypass (16) abfließen kann.

2. Flüssigkeitsfilter-Wärmetauscher-Einheit nach Anspruch 1,
**dadurch gekennzeichnet,**
**dass** das Bimetallelement (18) an der Öffnung des Bypass (16) angeordnet ist.

3. Flüssigkeitsfilter-Wärmetauscher-Einheit nach Anspruch 1 oder 2,
**dadurch gekennzeichnet,**
**dass** das Bimetallelement (18) am Wärmetauscher (3) befestigt ist.

4. Flüssigkeitsfilter-Wärmetauscher-Einheit nach Anspruch 3,
**dadurch gekennzeichnet,**
**dass** das Bimetallelement (18) in einer Grundplatte (22) des Wärmetauschers (3) angeordnet ist.

5. Flüssigkeitsfilter-Wärmetauscher-Einheit nach einem der Ansprüche 1 bis 4,
**dadurch gekennzeichnet,**
**dass** der Zulaufkanal (11) sowohl mit dem Bypass (16) als auch mit der Einlassöffnung (13) des Wärmetauschers (3) kommuniziert.

6. Flüssigkeitsfilter-Wärmetauscher-Einheit nach einem der Ansprüche 1 bis 5,
**dadurch gekennzeichnet,**
**dass** der Zulaufkanal (11) im Filtergehäuse (4) ausgebildet ist.

7. Flüssigkeitsfilter-Wärmetauscher-Einheit nach einem der Ansprüche 1 bis 6,
**dadurch gekennzeichnet,**
**dass** dem Bimetallelement (18) eine Prallplatte (21) vorgelagert ist.

8. Verwendung der Flüssigkeitsfilter-Wärmetauscher-Einheit nach einem der vorherigen Ansprüche zur Ölfilterung und Ölkühlung in einem Kraftfahrzeug.

## Claims

1. Liquid filter-heat exchanger unit, in particular for motor vehicles, the liquid filter (2) containing a filter element (5) in a filter housing (4) and the entry side (6) of the filter element (5) being connected with the discharge of the heat exchanger (3), with a bypass (16) which connects the inlet (11) directly with the entry side (6) of the filter element (5) by bypassing the heat exchanger (3), a switching element (17) being provided for to control the liquid flow in the heat exchanger (3) or in the bypass (16),
**characterized in that**
the switching element (17) comprises a bimetal element (18) which - independently of the operating condition of an internal combustion machine - directs the liquid flow into the bypass (16) at a temperature that is below a switching temperature, the liquid being able to flow completely out of the heat exchanger (3) via the bypass (16) during maintenance.

2. Liquid filter-heat exchanger unit according to claim 1,
**characterized in that**
the bimetal element (18) is arranged at the aperture of the bypass (16).

3. Liquid filter-heat exchanger unit according to claim 1 or 2,
**characterized in that**
the bimetal element (18) is attached to the heat exchanger (3).

4. Liquid filter-heat exchanger unit according to claim 3,
**characterized in that**
the bimetal element (18) is arranged in a base plate (22) of the heat exchanger (3).

5. Liquid filter-heat exchanger unit according to one of the claims 1 to 4,
**characterized in that**
the inlet (11) communicates with the bypass (16) as well as with the intake opening (13) of the heat exchanger (3).

6. Liquid filter-heat exchanger unit according to one of the claims 1 to 5,
**characterized in that**
the inlet (11) is formed in the filter housing (4).

7. Liquid filter-heat exchanger unit according to one of the claims 1 to 6,
**characterized in that**
a baffle plate (21) is located upstream the bimetal element (18).

8. Use of the liquid filter-heat exchanger unit according to one of the above claims for filtering and cooling oil in a motor vehicle.

## Revendications

1. Unité filtre à liquides/échangeur thermique, en particulier destinée aux véhicules automobiles, le filtre à liquides (2) placé dans un corps de filtre (4) présentant un élément de filtre (5) et le côté brut (6) de l'élément de filtre (5) étant relié à l'écoulement de l'échangeur thermique (3), l'unité étant dotée d'un bypass (16) autour de l'échangeur thermique (3) qui relie directement le canal d'alimentation (11) au côté brut (6) de l'élément de filtre (5), et un élément de commutation (17) régulant le flux de liquide étant prévu dans l'échangeur thermique (3) ou le bypass (16),
**caractérisée en ce que**
l'élément de commutation (17) comprend un élément bimétal (18) qui, indépendamment de l'état de fonctionnement d'un moteur à combustion interne, est disposé de manière à acheminer le flux de liquide dans le bypass (16) à une température inférieure à la température de commutation, la totalité du liquide pouvant, en cas d'inspection, couler de l'échangeur thermique (3) par l'intermédiaire du bypass (16).

2. Unité filtre à liquides/échangeur thermique selon la revendication 1,
**caractérisée en ce que**
l'élément bimétal (18) est disposé sur l'ouverture du bypass (16).

3. Unité filtre à liquides/échangeur thermique selon la revendication 1 ou 2,
**caractérisée en ce que**
l'élément bimétal (18) est fixé sur l'échangeur thermique (3).

4. Unité filtre à liquides/échangeur thermique selon la revendication 3,
**caractérisée en ce que**
l'élément bimétal (18) est disposé dans une plaque de base (22) de l'échangeur thermique (3).

5. Unité filtre à liquides/échangeur thermique selon une des revendications 1 à 4,
**caractérisée en ce que**
le canal d'alimentation (11) communique aussi bien avec le bypass (16) qu'avec l'ouverture d'entrée (13) de l'échangeur thermique (3).

6. Unité filtre à liquides/échangeur thermique selon une des revendications 1 à 5,
**caractérisée en ce que**
le canal d'alimentation (11) est formé dans le corps du filtre (4).

7. Unité filtre à liquides/échangeur thermique selon une des revendications 1 à 6,
**caractérisée en ce que**
une plaque de chicane (21) est montée en amont de l'élément bimétal (18).

8. Utilisation de l'unité filtre à liquides/échangeur thermique selon une des revendications précitées pour le filtrage d'huile et le refroidissement d'huile dans un véhicule automobile.
